# EUROPEAN PATENT APPLICATION

(11) **EP 1 952 930 A1**
(43) Date of publication of application: **06.08.2008**
(21) Application number: 08100849.2
(22) Date of filing: 24.01.2008
(51) Int. Cl.: B23K 11/14

(54) **Projection weld and method for creating the same**

(30) Priority: 30.01.2007 US 668559
(71) Applicant: General Electric Company, Schenectady, NY 12345 (US)
(72) Inventor: ARNETT, Michael Douglas, Simpsonville, SC 29681 (US); KOTTILINGAM, Srikanth Chandrudu, Simpsonville, SC 29681 (US); MUKIRA, Gitahi Charles, Simpsonville, SC 29680 (US); MURPHY, Jr.,, Gene Arthur, Pelzer, SC 29669 (US); NOWAK, Daniel Anthony, Greenville, SC 29607 (US)
(74) Representative: Bedford, Grant Richard

(57) **Abstract**

Disclosed is a projection welding method including providing a first metal substrate (12), a second metal substrate (14), and a projection material (16) of separate construction from the first metal substrate (12) and the second metal substrate (14), disposing the metal projection material (16) between the first metal substrate (12) and the second metal substrate (14), applying a current (26) and pressure (36) to at least one of the first metal substrate (12) and the second metal substrate (14), melting the metal projection material (16) via the application of the current (26) and pressure (36), creating a weld (10) between the first metal substrate (12) and the second metal substrate (14) via the melting, and fixedly associating the first metal substrate (12) and the second metal substrate (14) via the weld (10).

## Description

The disclosure relates generally to a method of welding, and more particularly to a method of projection welding.

Projection welding is a known technique for joining two overlapping metal sheets. In conventional projection welding, a small projection is provided on one of the sheets and extends transversely to a side of the sheet so that the tip thereof contacts the other sheet. A current producing device (such as an electrode of a welding gun) is pressed into contact with one of the sheets in alignment with the projection, and a combination of force and welding current is applied to the electrode to cause the projection to collapse and form a weld nugget which joins the two sheets together at the contact area defined by the projection.

Resistance projection welding is a solid state joining method, which eliminates the need for pre-heat that arc-welding methods require. Projection welding is also fast, which reduces manufacturing time. However, the properties of some metals render theses metals incapable of being directly welded to each other via this process. In addition, joints are very difficult to form in highly conductive materials, such as copper. Heat is conducted away from the joints rapidly, producing joints with defects. In welds, this can lead to lack of fusion and porosity. None-the-less, copper joints are essential in many applications, particularly in the magnetic coils of MRI equipment. Thus, there is a need for a more efficient forming of joints, and means for projection welding metals that are incapable of being directly welded to each other.

Disclosed is a projection welding method including providing a first metal substrate, a second metal substrate, and a projection material of separate construction from the first metal substrate and the second metal substrate, disposing the metal projection material between the first metal substrate and the second metal substrate, applying a current and pressure to at least one of the first metal substrate and the second metal substrate, melting the metal projection material via the application of the current and pressure, creating a weld between the first metal substrate and the second metal substrate via the melting, and fixedly associating the first metal substrate and the second metal substrate via the weld.

Also disclosed is a projection weld including a first metal substrate, a second metal substrate, a projection material separate from the first metal substrate and the second metal substrate, and a projection weld nugget including a mixture of the first metal substrate, the second metal substrate and the projection material.

Further disclosed is a projection welding method including providing a first metal substrate, a second metal substrate, and a metal projection material of separate construction from the first metal substrate and the second metal substrate, affixing the metal projection material to the first metal substrate, disposing the second metal substrate with the projection material and the first metal substrate such that the projection material is disposed between the first metal substrate and the second metal substrate, applying a current and a pressure to at least one of the first metal substrate and the second metal substrate, melting the metal projection material via the application of the current and the pressure, creating a weld between the first metal substrate and the second metal substrate via the melting, and fixedly associating the first metal substrate and the second metal substrate via the weld.

The following descriptions should not be considered limiting in any way. With reference to the accompanying drawings, like elements are numbered alike:
Figure 1 is a schematic side perspective view of an exploded projection weld in accordance with an exemplary embodiment;
Figure 2 is a schematic side perspective view of elements of a projection weld receiving a current;
Figure 3 is a schematic side view of a projection weld;
Figure 4 is a schematic side view of multiple projection welds; and
Figure 5 is a block diagram illustrating a method of projection welding.

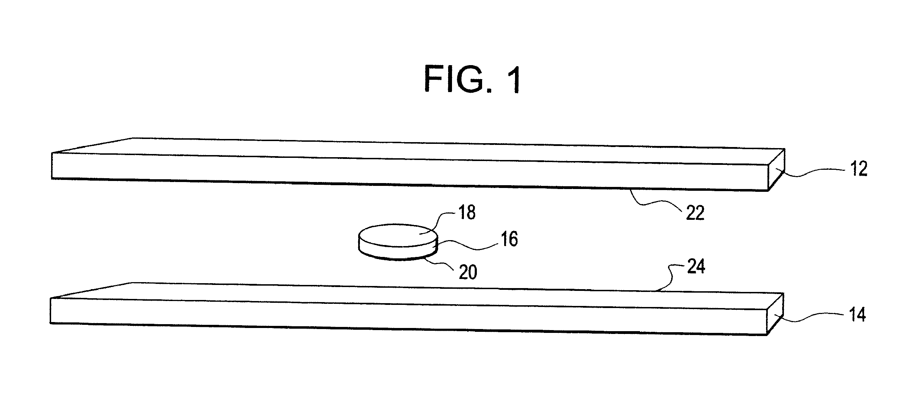

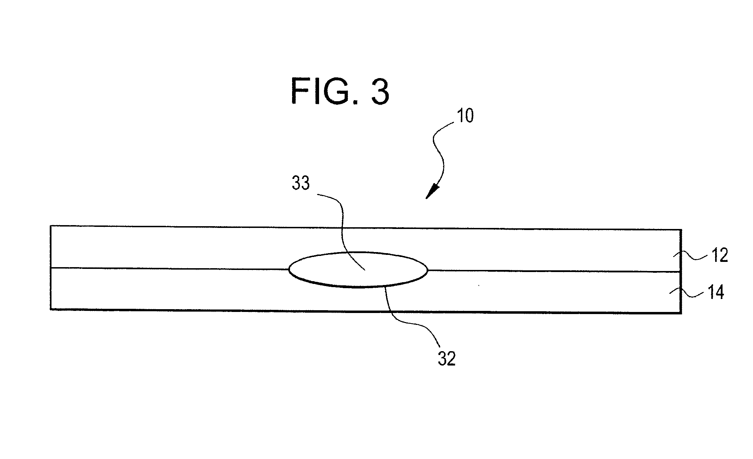

Referring to Figures 1-3, a projection weld 10 is illustrated and includes a first metal substrate 12, a second metal substrate 14, and a metal projection material 16. As is shown in the Figures (particularly in Figure 3) the metal projection material 16 fixedly associates the first substrate 12 with the second substrate 14 via projection welding. An exemplary embodiment of the manner by which this welding occurs will be described hereinbelow.

Referring to Figure 1, the components of the projection weld 10 are illustrated prior to being welded. As is shown in the Figure, the first substrate 12, second substrate 14, and projection material 16 are all of separate construction from each other. The first and second substrates 12 and 14 may be any metals (or multiple alloys) of the same or different compositions, such as but not limited to carbon, steel, aluminum, and copper. In an exemplary embodiment, these substrates 12 and 14 are substantially planar sheets, as shown in the Figures. The projection material 16 may also comprise any metal or multiple alloys of any desired composition, and be formed of wire, meshed wire (either of which may be cored or coated with flux), powder, or any other desirable material. In one exemplary embodiment a projection material of silver mesh is disposed between substrates of steel and aluminum. The form and metallic composition of the projection material 16 is selected to provide a strong projection weld between the first and second substrates 12 and 14, based on the properties of the first and second substrates 12 and 14. The projection 16 may also include any desirable shape, such as but not limited to a truncated cone or partial sphere.

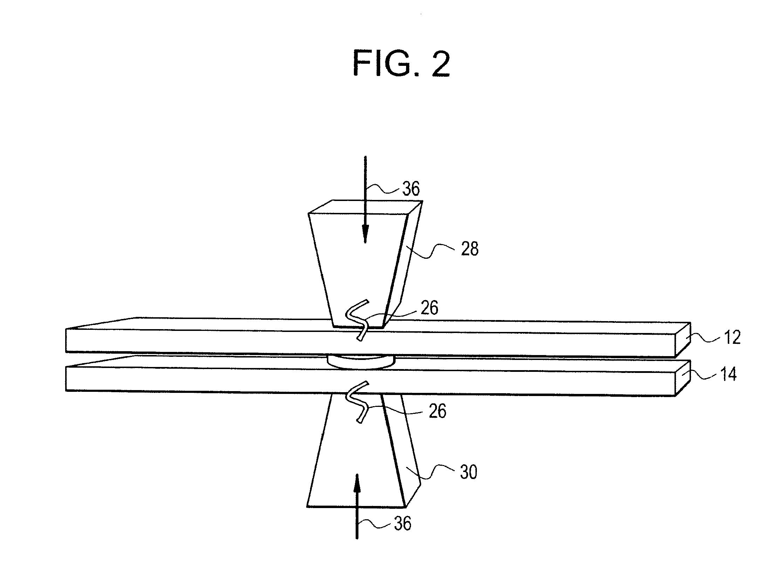

Referring to Figure 2, once the projection material 16 is selected and placed between the substrates 12 and 14, both substrates 12 and 14 may be brought into contact (or nearly into contact) with the projection 16 in preparation for projection welding the substrates 12 and 14. This contact (or near contact) occurs at opposite ends 18 and 20 of the projection 16 (see Figure 1), with the ends 18 and 20 respectively contacting relative inner surfaces 22 and 24 of the first and second substrates 12 and 14. Projection welding may then be accomplished via application of a current 26 and pressure 36 to at least one of the substrates 12 and 14. In the exemplary embodiment of Figure 2, the current 26 and pressure 36 are applied to both substrates 12 and 14 via electrodes 28 and 30. In this embodiment, the electrodes 28 and 30 are aligned with the projection substrate 16, and thus, provide the current in alignment with the projection 16. As mentioned above, the electrodes 28 and 30 also provide pressure to the substrates 12 and 14, again in alignment with the projection 16, which further expedites the projection welding process.

Referring now to Figure 3, providing the current 26 and pressure 36 to the substrates 12 and 14 creates a weld 32 that completely melts the projection material 16. This weld 32, created via heat generated by the current 26 and pressure 36, forms a projection weld nugget 33 that includes a mixture of the substrates 12 and 14 and projection material 16. The weld 32 fixedly associates the first substrate 12 and second substrate 14 via the projection welding process.

It should be appreciated that prior to application of the current 26 to at least one of the substrates 12 and 14, one end 18 or 20 of the separately constructed projection 16 may be first fixed to one of the surfaces 22 or 24 via any desirable means, such as but not limited to conventional welding. The other of the surfaces 22 or 24 may then be disposed in proximity to (or in contact with) the other of the ends 18 or 20, and the current 26 and pressure 36 may be applied. As above, the current 26 and pressure 36 will then create a weld that will completely consume projection material 16. Thus, it should be appreciated that a projection (such as projection 16) would be contemplated to be of separate construction from the substrates 12 and 14, even when the projection 16 is fixed to one or both of the substrates 12 and 14 prior to application of the current and pressure (i.e. prior to creation of the projection weld nugget 33), as is discussed above with reference to one of the substrates 12 and 14. The projection 16 may also comprise the same composition as one or both of the substrates 12 and 14, and be considered to be of separate construction from the substrates 12 and 14, regardless of whether or not the projection 16 is fixed to one or both of the substrates 12 and 14 prior to application of the current and pressure.

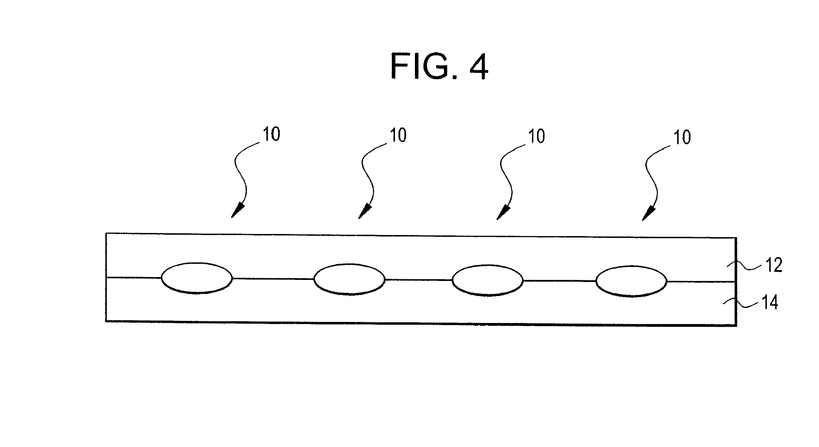

Referring to Figure 4, it should be additionally appreciated that the substrates 12 and 14 may be welded together via a plurality of welds 10 created via the projection welding processes described above. The plurality of welds 10 includes a plurality of projection material pieces 16 spaced from each.

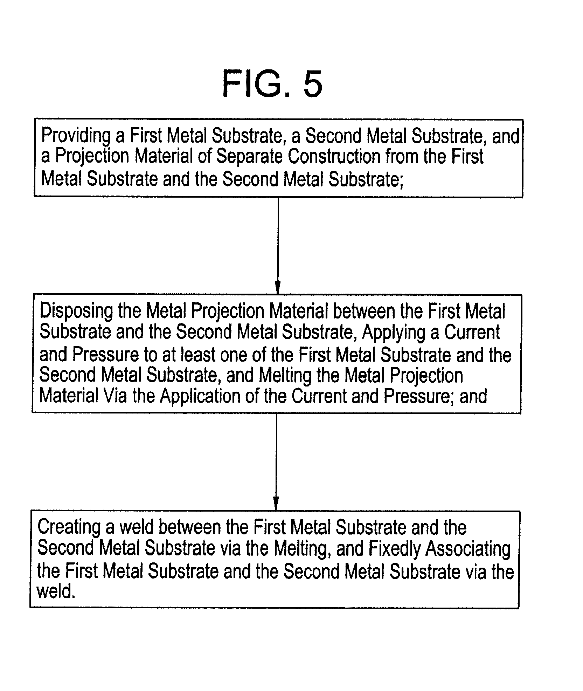

Referring to Figure 5, a method 100 of projection welding is illustrated and includes providing a first metal substrate 12, a second metal substrate 14, and a projection material 16 of separate construction from the first metal substrate 12 and the second metal substrate 14, as shown in operational block 102. The method 100 further includes disposing the metal projection material 16 between the first metal substrate 12 and the second metal substrate 14, applying a current and pressure to at least one of the first metal substrate and the second metal substrate, and melting the metal projection material 16 via the application of the current and pressure, as shown in operational block 104. The method 100 also includes creating a weld 32 between the first metal substrate 12 and the second metal 14 substrate via the melting, and fixedly associating the first metal substrate 12 and the second metal substrate 14 via the weld 32, as shown in operational block 106.

While the invention has been described with reference to an exemplary embodiment, it should be understood by those skilled in the art that various changes may be made and equivalents may be substituted for elements thereof without departing from the scope of the invention. In addition, many modifications may be made to adapt a particular situation or substance to the teachings of the invention without departing from the scope thereof. Therefore, it is important that the invention not be limited to the particular embodiment disclosed as the best mode contemplated for carrying out this invention, but that the invention will include all embodiments falling within the scope of the apportioned claims. Moreover, unless specifically stated any use of the terms first, second, etc. do not denote any order or importance, but rather the terms first, second, etc. are used to distinguish one element from another.

## Claims

1. A projection welding method, the method comprising:
providing a first metal substrate (12), a second metal substrate (14), and a projection material (16) of separate construction from said first metal substrate (12) and said second metal substrate (14);
disposing said metal projection material (16) between said first metal substrate (12) and said second metal substrate (14);
applying a current (26) and pressure (36) to at least one of said first metal substrate (12) and said second metal substrate (14);
melting said metal projection material (16) via said application of said current (26) and pressure (36);
creating a weld (10) between said first metal substrate (12) and said second metal substrate (14) via said melting; and
fixedly associating said first metal substrate (12) and said second metal substrate (14) via said weld (10).

2. The method of claim 1, wherein said metal substrates (12,14) are of the same base alloys.

3. The method of any preceding claim, wherein said first metal substrate (12) is steel, said second metal substrate (14) is aluminum, and said metal projection material (16) is a silver or copper alloy.

4. The method of claim 1, wherein said metal substrates (12,14) are of different base alloys.

5. The method of any preceding claim, wherein said metal projection material (16) is at least one of a wire, mesh, and powder.

6. The method of any preceding claim, wherein said metal projection material (16) comprises multiple alloys.

7. The method of any preceding claim, wherein said first metal substrate (12) and said second metal substrate (14) are substantially planar, and said metal projection material (16) is a plurality of projection material pieces spaced from each other.

8. A projection weld (10) comprising:
a first metal substrate (12);
a second metal substrate (14);
a projection material (16) separate from said first metal substrate (12) and said second metal substrate (14); and
a projection weld (10) nugget including a mixture of said first metal substrate (12), said second metal substrate (14) and said projection material (16).

9. A projection welding method, the method comprising:
providing a first metal substrate (12), a second metal substrate (14), and a metal projection material (16) of separate construction from said first metal substrate (12) and said second metal substrate (14);
affixing said metal projection material (16) to said first metal substrate (12);
disposing said second metal substrate (14) with said projection material (16) and said first metal substrate (12) such that said projection material (16) is disposed between said first metal substrate (12) and said second metal substrate (14);
applying a current (26) and a pressure (36) to at least one of said first metal substrate (12) and said second metal substrate (14);
melting said metal projection material (16) via said application of said current (26) and said pressure (36);
creating a weld (10) between said first metal substrate (12) and said second metal substrate (14) via said melting; and
fixedly associating said first metal substrate (12) and said second metal substrate (14) via said weld.

10. The method of claim 9, wherein said affixing of said metal projection material (16) to said first metal substrate (12) is accomplished via welding.
